# EUROPÄISCHE PATENTSCHRIFT

(11) **EP 3 583 879 B1**
(45) Veröffentlichungstag und Bekanntmachung des Hinweises auf die Patenterteilung: **20.01.2021**
(21) Anmeldenummer: 19180506.8
(22) Anmeldetag: 17.06.2019
(51) Int. Cl.: A47J 37/07, F24C 3/14

(54) **GRILLAUFSATZSET SOWIE GRILL**
GRILLING SET AND GRILL
ENSEMBLE D'INSERTS DE GRILL AINSI QUE GRILL

(30) Priorität: 19.06.2018 DE 102018114613
(43) Veröffentlichungstag der Anmeldung: 25.12.2019
(73) Patentinhaber: Meisen, Gottfried, 52249 Eschweiler (DE)
(72) Erfinder: Meisen, Gottfried, 52249 Eschweiler (DE)
(74) Vertreter: Pellengahr, Maximilian Rudolf

(56) Entgegenhaltungen:
- WO-A1-01/52706
- DE-A1- 2 429 839
- US-A- 3 895 622

## Beschreibung

### Einleitung

Die vorliegende Anmeldung betrifft ein Grillaufsatzset gemäß dem Oberbegriff von Anspruch 1. Ferner betrifft die vorliegende Anmeldung einen Grill gemäß dem Oberbegriff von Anspruch 12 sowie ein Verfahren zu dessen Betrieb.

Das Grillaufsatzset umfasst mindestens ein Gehäuse sowie mindestens einen an oder in dem Gehäuse lagerbaren Gargutträger, der insbesondere von einem Gargutträgere gebildet sein kann. Der Gargutträger ist in aller Regel von einer Vielzahl äquidistanter Stäbe gebildet, die eine Ablagefläche für jeweiliges Grillgut bilden. Das Gehäuse ist im Wesentlichen von einem umlaufenden Rand gebildet, der einen Innenraum des Gehäuses seitlich begrenzt. Dabei ist es grundsätzlich denkbar, dass der Rand von einer Mehrzahl einzelner Randabschnitte gebildet ist, die unter Ausbildung von Kanten aneinander grenzen, oder der Rand ringförmig ausgebildet ist, vergleichbar zu einem handelsüblichen Kugelgrill. Zu einer Oberseite hin ist das Gehäuse in aller Regel offen ausgebildet, wobei an der Oberseite oder zumindest in einem oberen Endbereich des Gehäuses typischerweise der Gargutträger angeordnet ist. Auf diese Weise ist es einem Nutzer des Grillaufsatzsets möglich, etwaiges Grillgut von der Oberseite des Gehäuses her auf den Gargutträger aufzulegen. Der Rand des Gehäuses dient im Wesentlichen dazu, von einer Unterseite des Gehäuses in den Innenraum aufsteigende Wärme seitlich einzufassen, sodass im Bereich des Gargutträgers eine ausreichende Gartemperatur erreicht werden kann. Das Gehäuse weist an seinem unteren Ende mindestens eine Ausnehmung auf, mittels der es auf eine Brenneinrichtung eines Gaskochers aufsetzbar ist. Die Ausnehmung ist insbesondere derart gestaltet, dass die Brenneinrichtung durch die Ausnehmung hindurch zumindest teilweise in den Innenraum des Gehäuses hineinragen kann.

Weiterhin umfasst das Grillaufsatzset erfindungsgemäß mindestens einen Flammenschutz, der auf eine Brenneinrichtung eines Gaskochers aufsetzbar ist. Mithin befindet sich der Flammenschutz während einer Verwendung des Grillaufsatzsets zusammen mit einem entsprechenden Gaskocher in aller Regel unmittelbar im Bereich der unteren Ausnehmung des Gehäuses sowie typischerweise in Wirkverbindung mit einer Brenneinrichtung des jeweiligen Gaskochers. Insbesondere kann der Flammenschutz auf die Brenneinrichtung einfassende Tragelemente des jeweiligen Gaskochers auflegbar sein. Der Flammenschutz ist mithin vorzugsweise zwischen der Ausnehmung am unteren Ende des Gehäuses und dem Gargutträger angeordnet.

Der Flammenschutz umfasst ein vorzugsweise in sich ebenes Bodenelement sowie ein ringförmig umlaufendes Kragenelement, das über eine Bodenebene des Bodenelements hinaus vorsteht. Das Kragenelement kann sich senkrecht zu der Bodenebene oder unter einem von 90° verschiedenen Winkel zu der Bodenebene erstrecken. Insbesondere ist es denkbar, dass das Kragenelement um 45° gegenüber der zur Bodenebene Orthogonalen nach außen geneigt ist. Der Flammenschutz dient dazu, von der Brenneinrichtung in vertikale Richtung nach oben aufsteigende Flammen seitlich abzulenken und eine durch die Brenneinrichtung bedingte Wärmeentwicklung in dem Innenraum des Gehäuses auf diese Weise zu dämpfen bzw. die bereitgestellte Wärmeenergie gleichmäßig in dem Innenraum des Gehäuses zu verteilen. Insbesondere wird der Effekt erzielt, dass ausgehend von der Brenneinrichtung aufsteigende Flammen mittels des Flammenschutzes daran gehindert werden, unmittelbar nach oben in Richtung des Gargutträgers zu schlagen. Stattdessen schlagen die Flammen gegen eine der Brenneinrichtung zugewandte Oberfläche des Flammenschutzes und werden hierdurch seitlich abgelenkt. Mittels Energie der Flammen erzeugte Heißluft muss sodann zunächst den Flammenschutz umströmen, bevor sie seitlich des Flammenschutzes innerhalb des Innenraums des Gehäuses aufsteigen und schließlich auf dem Gargutträger sowie das darauf befindliche Grillgut trifft. Von besonderer Bedeutung ist dabei das umlaufende Kragenelement des Flammenschutzes, das dazu geeignet ist, die Flammen einer Brenneinrichtung davon abzuhalten, seitlich des Flammenschutzes in eine Richtung nach oben, das heißt auf den Gargutträger zu, zu schlagen. Zudem wird mittels des Kragenelements ein Strömungsweg einer von einer Brenneinrichtung ausgehenden Heißluftströmung zusätzlich verlängert und auf diese Weise eine von der Brenneinrichtung zur Verfügung gestellte Wärmeenergie innerhalb des Gehäuses besser verteilt.

Primär trägt der Flammenschutz dazu bei, dass eine Temperaturentwicklung im Bereich des Gargutträgers homogen, einfach einstellbar und kontrollierbar ist, sodass ein "schnelles Verbrennen" des Grillguts vermieden werden kann. Sofern sich die Brenneinrichtung nicht durch die untere Ausnehmung des Gehäuses hindurch zumindest teilweise bis in den Innenraum des letzteren hinein erstreckt, wird gleichzeitig sichergestellt, dass die von der Brenneinrichtung erzeugte Wärmeenergie trotz seitlicher Ablenkung der Flammen mittels des Flammenschutzes nicht seitlich an dem Gehäuse vorbei gelenkt wird, sondern trotzdem - von dem Gehäuse aus betrachtet - diesseits der Ausnehmung einen Wirkungsbereich des Flammenschutzes verlässt und daraufhin unmittelbar innerhalb des Gehäuses nach oben steigt, da der Flammenschutz erst innerhalb des Gehäuses wirkt. Die Ränder des Gehäuses sind mithin dazu geeignet, eine auf diese Weise gelenkte Heißluftströmung innerhalb des Innenraums einzufassen und gezielt auf den Gargutträger zu leiten.

Der Grill umfasst einen Gaskocher, der wiederum einen Gasspeicher sowie eine Brenneinrichtung umfasst. Die Brenneinrichtung ist derart strömungstechnisch mit dem Gasspeicher verbunden, dass der Brenneinrichtung ausgehend von dem Gasspeicher ein Brenngas zuleitbar ist. Der Gaskocher kann zudem beispielsweise mit einer Zündeinrichtung ausgestattet sein, die eine Entzündung einer Flamme in Gegenwart des Brenngases ermöglicht. Zudem ist es üblich, dass ein derartiger Gaskocher mit mindestens einem Regelventil ausgestattet ist, mittels dessen ein Gasvolumenstrom und mithin eine Heizleistung der Brenneinrichtung einstellbar ist. Die Brenneinrichtung ist zudem in aller Regel mit einem Traggestell ausgestattet, das eine leicht oberhalb der Brenneinrichtung angeordnete Abstellfläche bereitstellt. Diese führt die Eignung herbei, etwaiges Kochgeschirr aufzunehmen, beispielsweise einen Topf oder eine Pfanne. Von der Brenneinrichtung ausgehende Flammen können sodann zumindest mittelbar mit einem Boden des jeweiligen Kochgeschirrs in Kontakt treten und letzteres besonders effizient erwärmen.

### Stand der Technik

Im Stand der Technik sind Grills, insbesondere in Form von Kugelgrills, bereits weitlich bekannt. Diese werden typischerweise mit Holzkohle betrieben. Modelle, die in Form eines Gasgrills ausgeführt sind, werden gegenwärtig zusehends beliebter. Ebenfalls sind Gaskocher, insbesondere mobile Camping-Gaskocher, bekannt, die insbesondere in der Caravaning- sowie in der Outdoor-Szene eine wesentliche Bedeutung hinsichtlich autarker Gestaltung der Freizeit haben. Weiterhin ist bereits die grundsätzliche Idee bekannt, einen Camping-Gaskocher in einer Art und Weise herzurichten, dass dieser nicht lediglich zum Kochen, insbesondere unter Verwendung von Kochgeschirr, sondern ferner auch zum Grillen von Speisen geeignet ist.

Beispielsweise ist ein Grillaufsatzset aus der deutschen Offenlegungsschrift DE 24 29 839 A1 bekannt, das mit einem Gaskocher verwendbar ist. Zum Ausgleich einer Temperaturverteilung in dem Gehäuse des Grillgeräts weist selbiges einen Deckel auf, der oberhalb einer Brenneinrichtung des Gaskochers angeordnet ist. Die Flammen des Gaskochers schlagen auf diese Weise gegen eine Unterseite des Deckels, der sich erhitzt und eine Vergleichmäßigung der Temperaturverteilung erreicht.

Das bekannte Grillgerät ist betreffend die Verteilung der Temperatur in dem Gehäuse ist insoweit nachteilig, als trotz des verwendeten Deckels regelmäßig Temperaturzonen auftreten, die das jeweilige Gargut innerhalb kürzester Zeit garen, selbst wenn der Verwender des Grillgeräts eine schonende Erwärmung wünscht.

### Aufgabe

Der vorliegenden Anmeldung liegt mithin die Aufgabe zugrunde, ein Grillaufsatzset bereitzustellen, mittels dessen eine schonende Zubereitung von Grillspeisen unter Verwendung eines handelsüblichen Gaskochers, insbesondere eines Camping-Gaskochers, möglich ist.

### Lösung

Die zugrunde liegende Aufgabe wird erfindungsgemäß durch ein Grillaufsatzset mit den Merkmalen des Anspruchs 1 gelöst. Vorteilhafte Ausgestaltungen ergeben sich aus den Unteransprüchen 2 bis 11.

Das erfindungsgemäße Grillaufsatzset ist dadurch gekennzeichnet, dass der Flammenschutz derart relativ zu dem Gehäuse bewegbar, insbesondere drehbar, ausgebildet ist, dass er zwischen einer Backstellung und einer Grillstellung überführbar ist. Beispielsweise kann der Flammenschutz vollständig losgelöst von dem Gehäuse als körperlich getrenntes Bauteil ausgebildet sein, sodass er nach Belieben bewegbar ist. Eine Kraft übertragende Anordnung des Flammenschutzes beispielsweise an dem Gehäuse des Grillaufsatzsets ist gleichwohl ebenso denkbar, beispielsweise unter Ausbildung einer Drehachse, um die der Flammenschutz drehbar in Kraft übertragender Weise an dem Gehäuse angeordnet ist. Sofern der Flammenschutz drehbar ausgebildet ist, erstreckt sich die zugehörige Drehachse vorzugsweise innerhalb der Bodenebene des Bodenelements des Flammenschutzes sowie parallel zu einer Ebene der unteren Ausnehmung des Gehäuses. Die Drehachse ist mithin vorzugsweise horizontal orientiert. Bei Realisierung einer solchen Drehachse kann der Flammenschutz mittels Verdrehung um selbige Drehachse um 180° gewissermaßen "gewendet" werden, sodass eine Oberseite des Flammenschutzes nach der Wendung sodann seine Unterseite bildet und umgekehrt.

Die Erfindung hat viele Vorteile. Insbesondere eröffnet ein relativ zu dem Gehäuse bewegbarer Flammenschutz dem Nutzer des Grillaufsatzsets die Möglichkeit, selbigen zwischen einer Backstellung und einer Grillstellung zu überführen. Bei Vorliegen des Flammenschutzes in seiner Backstellung erstreckt sich das Kragenelement ausgehend von der Bodenebene des Bodenelements in Richtung von einer Oberseite des Gehäuses weg nach unten, das heißt in Richtung der unteren Ausnehmung des Gehäuses. Sofern ein mit dem Grillaufsatzset kombinierter Gaskocher ein Traggestell aufweist, das im Übrigen zur Aufnahme von Kochgeschirr geeignet ist, steht der Flammenschutz vorteilhafterweise bei Vorliegen in seiner Backstellung mit seinem umlaufenden Kragenelement auf einer Aufstellfläche des Traggestells auf, sodass das Bodenelement des Flammenschutzes in einem solchen Maß von dem Traggestell entfernt angeordnet ist, das einer senkrecht zu der Bodenebene gemessenen Höhe des Kragenelements entspricht.

In dieser Backstellung des Flammenschutzes muss ausgehend von einer Brenneinrichtung des jeweiligen Gaskochers aufsteigende Heißluft mittels Wirkung des Bodenelements zunächst von einer vertikalen Strömungsrichtung in eine horizontale Strömungsrichtung umgelenkt werden und sodann mittels Wirkung des nach unten vorstehenden Kragenelements letzteres vollständig umströmen, das heißt sogar zeitweise eine Strömung nach unten ausführen, bevor sie nach Verlassen eines Wirkungsbereichs des Flammenschutzes schließlich vertikal nach oben in Richtung des Gargutträgers aufsteigen kann. Es versteht sich, dass während eines Betriebs des Gaskochers in dieser Weise der Flammenschutz als solcher stark erwärmt wird, wodurch insbesondere das Bodenelement des Flammenschutzes eine erhebliche Wärmestrahlwirkung erzeugt. Auf diese Weise wird der Innenraum des Gehäuses sowohl infolge der Erwärmung des Flammenschutzes als auch infolge der den Flammenschutz umströmenden Heißluft besonders zügig, und insbesondere besonders gleichmäßig, erwärmt. Lokal begrenzte und für sich alleine genommen besonders stark ausgeprägte "hot spots", die sich infolge eines unmittelbaren Wärmestroms ausgehend von einer Flamme einer Brenneinrichtung vertikal nach oben in Richtung des Gargutträger erstrecken, wie im Stand der Technik bekannt, sind gleichzeitig vermieden, sodass die gewünschte schonende Garung ermöglicht ist. Ein unmittelbares Rösten oder gar Verbrennen des Garguts findet folglich nicht statt. Das Grillaufsatzset ist auf diese Weise in der Funktionalität eines Backofens nutzbar.

Die Grillstellung des Flammenschutzes ist im Vergleich zu der Backstellung derart umgekehrt, dass sich das Kragenelement ausgehend von dem Bodenelement in Richtung der Oberseite des Gehäuses erstreckt. Auf diese Weise wird bewusst auf den Effekt verzichtet, dass mittels der Brenneinrichtung erzeugte Wärmeenergie in Form aufsteigender Heißluft vor Verlassen des Wirkungsbereichs des Flammenschutzes zunächst noch das Kragenelement umströmen muss. Stattdessen wird der Heißluftstrom mittels des Flammenschutzes bzw. des Bodenelements desselben lediglich seitlich abgelenkt, bevor er bei Erreichen des äußeren Randes des Flammenschutzes direkt weiter nach oben strömen kann. Dies hat den technischen Effekt, dass die Temperaturentwicklung innerhalb des Gehäuses und mithin an dem Gargutträger im Bereich der Oberseite des Gehäuses im Vergleich zur Verwendung des Flammenschutzes in seiner Backstellung ausgeprägter ist, wodurch bei Bedarf zwecks Grillen mancher Speisen eine höhere Grilltemperatur erzeugt werden kann. Dies kann beispielsweise bei Steaks vorteilhaft sein, deren Poren durch Wirkung einer vergleichsweise hohen Grilltemperatur verschlossen werden sollen.

Weiterhin kann bei Vorliegen des Flammenschutzes in der Grillstellung der Effekt auftreten, dass die von der Brenneinrichtung ausgehenden Flammen nach ihrer seitlichen Ablenkung den äußeren Rand des Bodenelements des Flammenschutzes erreichen und diesen so weit übertreten, dass zumindest eine Flammenspitze nach oben in Richtung des Gargutträgers aufsteigen kann. Auf diese Weise kann in vergleichbar unmittelbarer Weise Wärmeenergie zur Verfügung gestellt werden, die zu einer deutlich größeren Wärmeentwicklung im Bereich des Gargutträgers führt. In der Backstellung des Flammenschutzes wird dieser Effekt gezielt mittels des nach unten vorstehenden Kragenelements unterbunden. Auch bei Vorliegen des Flammenschutzes in seiner Grillstellung wird eine deutliche Abschwächung des unmittelbaren Wärmestroms von der Brenneinrichtung hin zum Gargutträger erreicht, sodass ein unbeabsichtigtes Verbrennen von Grillgut signifikant weniger schnell auftritt als wenn kein Flammenschutz vorhanden wäre. Die punktuelle Temperaturentwicklung ist im Vergleich zum Vorliegen des Flammenschutzes in seiner Backstellung stärker ausgeprägt, sodass ein Rösten des Garguts stattfinden kann.

In einer vorteilhaften Ausgestaltung des erfindungsgemäßen Grillaufsatzsets ist der Flammenschutz elliptisch, insbesondere kreisförmig, ausgebildet. Auf diese Weise ist der Flammenschutz besonders gut dazu geeignet, mit einer Vielzahl üblicher (Camping-)Gaskocher zusammenzuwirken, deren Brenneinrichtung typischerweise ebenfalls eine kreisförmige Form aufweisen. Von Bedeutung ist dabei, dass der Flammenschutz dazu geeignet ist, die Brenneinrichtung zumindest im Wesentlichen in seinem solchen Maß abzudecken, dass von der Brenneinrichtung ausgehende Flammen sich nicht unmittelbar an dem Flammenschutz vorbei vertikal nach oben entwickeln können, sondern durch den Flammenschutz abgeschirmt und seitlich abgelenkt werden.

Weiterhin ist eine solche Ausgestaltung von Vorteil, bei der sich das Kragenelement des Flammenschutzes ausgehend von dem Rand seines Bodenelements erstreckt. Bei dieser Ausführung bildet das Kragenelement gewissermaßen einen umlaufenden Abschluss des Flammenschutzes.

In einer weiterhin vorteilhaften Ausgestaltung des erfindungsgemäßen Grillaufsatzsets ist der Flammenschutz derart ausgebildet, dass eine von der Bodenebene des Bodenelements aus sowie senkrecht zu der Bodenebene gemessene Höhe des Kragenelements im Bereich zwischen 0,5 cm und 4,0 cm, vorzugsweise zwischen 1,0 cm und 2,0 cm, liegt. Weiterhin ist es von besonderem Vorteil, wenn ein Durchmesser des Flammenschutzes im Bereich zwischen 10 cm und 20 cm, vorzugsweise im Bereich zwischen 12,5 cm und 17,5 cm, liegt. Ein Verhältnis von Höhe des Kragenelements und Durchmesser des Flammenschutzes liegt entsprechend vorteilhafterweise im Bereich zwischen 1:40 bis 1:5, vorzugsweise im Bereich zwischen 1:10 bis 1:20. Vorteilhafterweise erstreckt sich das Kragenelement ausgehend von dem Bodenelement in eine hierzu senkrechte Richtung, sodass der Durchmesser des Flammenschutzes insgesamt dem Durchmesser des Bodenelements entspricht. In Fällen, in denen sich das Kragenelement unter einem von 90° verschiedenen Winkel ausgehend von dem Bodenelement erstreckt, beschreibt der Durchmesser des Flammenschutzes einen maximalen Außendurchmesser desselben, der sich folglich gegebenenfalls an einen äußeren Rand des Kragenelements bemessen kann.

Betreffend das Gehäuse des erfindungsgemäßen Grillaufsatzsets kann es zudem vorteilhaft sein, wenn die untere Ausnehmung desselben eine elliptische, vorzugsweise eine kreisförmige, Form aufweist. Auf diese Weise ist das Gehäuse besonders gut dazu geeignet, einer Brenneinrichtung zusammenzuwirken, die gleichfalls eine kreisförmige bzw. elliptische Form aufweist.

Besonders vorteilhaft ist eine solche Ausgestaltung des Gehäuses, bei der an einer Unterseite des Gehäuses zumindest bereichsweise Aussparungen angeordnet sind, die mit Tragelementen eines jeweiligen Gaskochers korrespondieren können. Dem liegt die Überlegung zugrunde, dass derartige Tragelemente bei Gaskochern typischerweise deutlich über eine Oberseite des Gaskochers hinaus vorstehen, um eine beschriebene Aufstellfläche für Kochgeschirr zu bilden. Derartige Tragelemente können je nach Art des Gaskochers vergleichsweise lang ausgebildet sein, wobei sie sich in aller Regel ausgehend von einem Mittelbereich des Gaskochers radial nach außen erstrecken. Typisch sind solche Ausgestaltungen, bei denen ein Gaskocher über vier gleichmäßig verteilte Tragelemente verfügt, die radial ausgehend von einem Mittelbereich angeordnet sind. Um das Gehäuse derart auf den Gaskocher aufsetzen zu können, dass die Brenneinrichtung sich zumindest teilweise durch die Ausnehmung hindurch in den Innenraum erstreckt, sind die beschriebenen Aussparungen vorteilhaft, in die etwaige Tragelement einfahren können, sodass sie nicht mit dem Gehäuse kollidieren. Auf diese Weise ist es besonders einfach möglich, eine Unterseite des Gehäuses bis unterhalb der Stellfläche der Tragelemente zu führen und in unmittelbarer Nähe zu einer Oberseite des Gaskochers oder sogar in unmittelbaren Kontakt mit letzterer anzuordnen.

Im Hinblick auf eine möglichst gleichmäßige Wärmeentwicklung im Bereich des Gargutträgers ist es zudem von Vorteil, wenn der Rand des Gehäuses vergleichbar zu der Form eines Kugelgrills im Querschnitt betrachtet eine elliptische, vorzugsweise kreisförmige, Form aufweist. Eine Verteilung von Wärmeenergie ausgehend von einer typischerweise kreisförmigen Brenneinrichtung eines jeweiligen Gaskochers hin zu einem beispielsweise rechteckigen Querschnitt des Gehäuses wird hierdurch vermieden.

Weiterhin kann eine solche Ausgestaltung des Grillaufsatzsets von Vorteil sein, bei der selbiges einen Deckel aufweist. Dieser ist dazu geeignet, in einer Weise an das Gehäuse angeschlossen zu werden, dass er gemeinsam mit dem Gehäuse den Innenraum desselben einfasst. Insbesondere dient der Deckel dazu, eine Oberseite des Gehäuses abzuschließen, sodass innerhalb des Innenraums aufsteigende Wärme nicht ungehindert an der Oberseite des Gehäuses entweichen kann, sondern mittels des Deckels zumindest zeitweise innerhalb des Innenraums gehalten wird. Hierdurch lässt sich bei deutlich gesenktem Gasverbrauch eine gewünschte Gartemperatur in dem Innenraum halten.

Das erfindungsgemäße Grillaufsatzset weiter ausgestaltend umfasst selbiges einen Kohleeinsatz, der derart in das Gehäuse einsetzbar ist, dass die untere Ausnehmung des Gehäuses mittels des Kohleeinsatzes zumindest teilweise, vorzugsweise vollständig, verschließbar ist. Dieses Verschließen erfolgt vorteilhafterweise in solcher Art, dass zwischen einem unteren Ende des Kohleeinsatzes und der Ausnehmung als solcher ein gewisser Abstand verbleibt, sodass der Kohleeinsatz das Einragen zumindest eines Teils einer Brenneinrichtung eines jeweiligen Gaskochers in den Innenraum des Gehäuses nicht behindert. Mit anderen Worten ist die Ausnehmung von einer Unterseite des Gehäuses aus betrachtet in solchem Umfang weiterhin frei und offen, dass eine Brenneinrichtung zumindest teilweise in den Innenraum des Gehäuses hineinragen kann, wobei jedoch durch Wirkung des Kohleeinsatzes auf einem Höhenniveau oberhalb der Brenneinrichtung eine Art "Zwischenboden" bereitgestellt ist, auf dem Grillkohle lagerbar ist. Der Kohleeinsatz stellt diesen Zwischenboden zur Verfügung. Letzterer verhindert dadurch, dass von einer Oberseite des Gehäuses her in das Gehäuse eingefüllte Kohle die untere Ausnehmung des Gehäuses erreicht, wodurch effektiv ein Austritt der Kohle an der Unterseite des Gehäuses verhindert ist.

Der Kohleeinsatz erhöht die Flexibilität des erfindungsgemäßen Grillaufsatzsets insoweit, als im Bedarfsfall das Grillaufsatzset beispielsweise mit Grillkohle oder Grillbriketts als Brennstoff betrieben werden kann. Die Bevorzugung einer Gasflamme oder einer Kohleglut als primären Spender von Wärmeenergie fällt gemeinhin verschiedene aus, sodass mittels des Kohleeinsatzes die Möglichkeit eingeräumt wird, einer persönlichen Bevorzugung von Grillen mittels Holzkohle nachzukommen. Der Kohleeinsatz bietet dabei den besonderen Vorteil, dass die darin befindliche Kohle besonders einfach mittels Wirkung des Gaskochers bzw. seiner Brenneinrichtung entzündet werden kann, wobei eine von der Brenneinrichtung erzeugte Flamme vorzugsweise unmittelbar mit einer Unterseite des Kohleeinsatzes in Kontakt tritt und diese erwärmt. Infolge dieser Wärmeentwicklung werden Temperaturen an dem Kohleeinsatz erzeugt, die ausreichend sind, in dem Kohleeinsatz befindliche Kohle zu entzünden. Um diesen Effekt zu verbessern, kann es vorteilhaft sein, eine Unterseite des Kohleeinsatzes mit mindestens einem Loch, vorzugsweise einer Mehrzahl von Löchern, auszustatten, sodass ein unmittelbarer Kontakt zwischen der Kohle und Flammen der Brenneinrichtung möglich ist. Der Kohleeinsatz kann insbesondere ein Bodenelement sowie einen das Bodenelement umlaufend einfassenden Rand aufweisen.

Schließlich kann ein solches Grillaufsatzset vorteilhaft sein, das mindestens einen Fettschutz aufweist, der mit dem Flammenschutz zusammenwirkt. Insbesondere kann der Fettschutz eine Mehrzahl von Lavasteinen umfassen. Diese sind dazu geeignet, von dem Gargutträger herabtropfendes Fett aufzunehmen und auf diese Weise vor einem unmittelbaren Kontakt mit dem Flammenschutz zu schützen. Letzteres kann insbesondere bei Vorliegen des Flammenschutzes in einer Grillstellung dazu führen, dass das Fett verbrennt und einen unerwünschten Flammenschlag auslöst. Der Fettschutz ist vorzugsweise zerstörungsfrei aus dem Grillaufsatzset entnehmbar. Auf diese Weise kann er besonders einfach regelmäßig gereinigt werden.

Die zugrunde liegende Aufgabe wird erfindungsgemäß ferner durch einen Grill mit den Merkmalen des Anspruchs 12 gelöst.

Der erfindungsgemäße Grill ist dadurch gekennzeichnet, dass er mit einem erfindungsgemäßen Grillaufsatzset gemäß der vorstehenden Beschreibung ausgestattet ist. Der Gaskocher und das Grillaufsatzset des erfindungsgemäßen Grills wirken derart zusammen, dass das Gehäuse des Grillaufsatzsets auf die Brenneinrichtung des Gaskochers aufgesetzt ist, wobei vorzugsweise sich die Brenneinrichtung zumindest teilweise durch die untere Ausnehmung des Gehäuses hindurch in den Innenraum des Gehäuses hinein erstreckt. Der Flammenschutz wirkt mit der Brenneinrichtung zusammen und befindet sich mithin in unmittelbarer Umgebung zu der unteren Ausnehmung des Gehäuses. Vorteilhafterweise ist der Flammenschutz zumindest mittelbar, vorzugsweise unmittelbar, auf die Brenneinrichtung aufgesetzt. Zudem ist der Flammenschutz derart ausgebildet, dass sein Durchmesser einen Durchmesser der Brenneinrichtung übersteigt. Auf diese Weise ist sichergestellt, dass von der Brenneinrichtung ausgehende Flammen mittels des Flammenschutzes seitlich abgelenkt werden können.

Der erfindungsgemäße Grill ist mittels des erfindungsgemäßen Grillaufsatzsets gemäß vorstehender Beschreibung besonders einfach herstellbar. Die sich ergebenden Vorteile durch die Kombination des Grillaufsatzsets mit dem Gaskocher des beschriebenen Grills sind vorstehend bereits umfassend dargelegt. Insbesondere wird die Möglichkeit geschaffen, einen handelsüblichen Gaskocher, insbesondere einen Camping-Gaskocher, unter Verwendung des Grillaufsatzsets zum Grillen zu verwenden, ohne dass die aus dem Stand der Technik zu beklagende Problematik eines überschnellen Verbrennens sowie ungleicher Temperaturentwicklung im Bereich des Gargutträgers auftreten. Hierbei kann der Flammenschutz in einer Backstellung und einer Grillstellung benutzt werden, wobei zwecks Überführung des Flammenschutzes zwischen der Backstellung und der Grillstellung der Flammenschutz relativ zu dem Gehäuse des Grillaufsatzsets sowie relativ zu der Brenneinrichtung des Gaskochers bewegbar ist.

Die zugrunde liegende Aufgabe wird schließlich ferner mittels eines Verfahrens zum Betrieb eines Grills mit den Merkmalen des Anspruchs 13 gelöst. Eine vorteilhafte Ausgestaltung ergibt sich aus dem zugehörigen Unteranspruch 14.

Das erfindungsgemäße Verfahren ist dadurch gekennzeichnet, dass der Flammenschutz zwischen einer Grillstellung und einer Backstellung überführt wird, wobei der Flammenschutz insbesondere um eine horizontale Achse um 180° gedreht wird. Die sich hierdurch ergebenden Vorteile sind vorstehend bereits dargelegt.

### Ausführungsbeispiele

Das erfindungsgemäße Grillaufsatzset sowie der erfindungsgemäße Grill sind nachstehend anhand eines Ausführungsbeispiels, das in den Figuren dargestellt ist, näher erläutert. Es zeigt:
- Fig. 1:: Eine perspektivische Ansicht eines erfindungsgemäßen Grills,
- Fig. 2:: Eine weitere perspektivische Ansicht eines erfindungsgemäßen Grills, bei dem ein Flammenschutz fehlt,
- Fig. 3:: Eine Seitenansicht einer Brenneinrichtung sowie eines mit der Brenneinrichtung zusammenwirkenden Flammenschutzes, wobei sich der Flammenschutz in einer Backstellung befindet,
- Fig. 4:: die Seitenansicht gemäß Figur 3, wobei sich der Flammenschutz in einer Grillstellung befindet,
- Fig. 5:: Eine perspektivische Ansicht eines Gaskochers mit einem auf seiner Brenneinrichtung aufgesetzten Flammenschutz und
- Fig. 6:: Ein mit einem Kohleeinsatz ausgestattetes erfindungsgemäßes Grillaufsatzset.

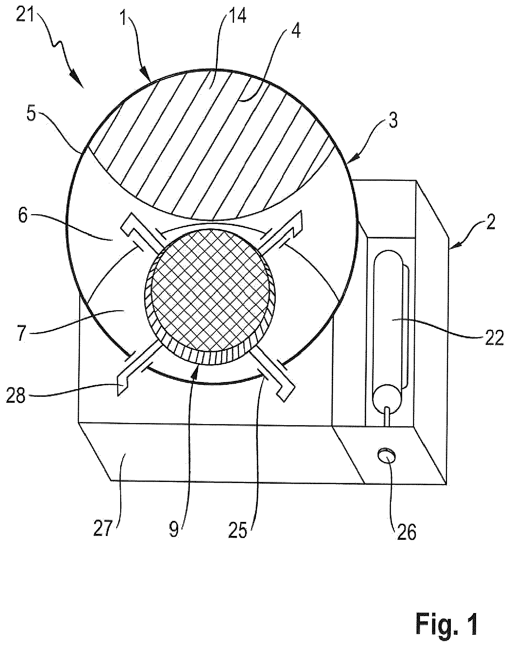

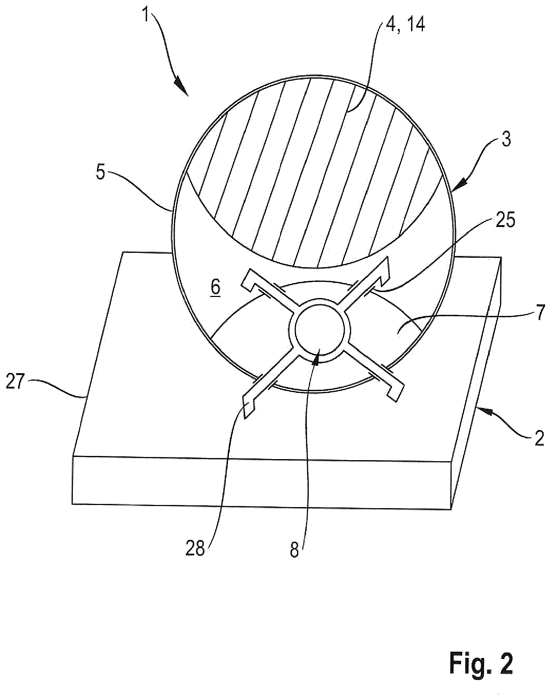

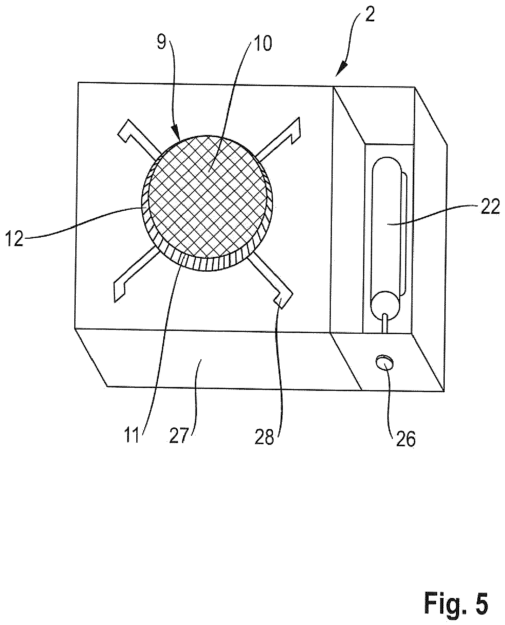

Das Ausführungsbeispiel, das in den **Figuren 1 bis 6** dargestellt ist, umfasst ein erfindungsgemäßes Grillaufsatzset **1,** das gemeinsam mit einem Gaskocher **2** zu einem erfindungsgemäßen Grill **21** verbunden ist. Der Gaskocher **2** ist hier von einem handelsüblichen Camping-Gaskocher gebildet, der ein kastenförmiges Gehäuse **27** sowie einen darin befindlichen Gasspeicher **22** umfasst. Ferner verfügt der Gaskocher **2** über einen Drehregler **26,** mittels dessen ein von dem Gasspeicher **22** in Richtung der Brenneinrichtung **8** strömender Gasvolumenstrom und mithin eine Leistung einer Brenneinrichtung **8** des Gaskochers **2** regulierbar ist.

Das erfindungsgemäße Grillaufsatzset **1** umfasst ein Gehäuse **3** sowie einen an einer Oberseite **14** des Gehäuses **3** angeordneten Gargutträger **4.** Das Gehäuse **3** umfasst seinerseits einen umlaufenden Rand **5,** mittels dessen ein Innenraum **6** des Gehäuses **3** seitlich eingefasst ist. In dem gezeigten Beispiel ist der Gargutträger **4** an einem oberen Ende des Gehäuses **3** angeordnet und bildet gewissermaßen eine obere räumliche Begrenzung des Innenraums **6.** An einer Unterseite bzw. einem unteren Ende weist das Gehäuse **3** eine Ausnehmung **7** auf. Diese ist dazu geeignet, mit einer Oberseite des Gaskochers **2** derart zusammenzuwirken, dass das Gehäuse **3** auf den Gaskocher **2** aufsetzbar ist. Hierbei erstreckt sich eine Brenneinrichtung **8** des Gaskochers **2** durch die Ausnehmung **7** hindurch zumindest teilweise bis in den Innenraum **6** des Gehäuses **3** hinein.

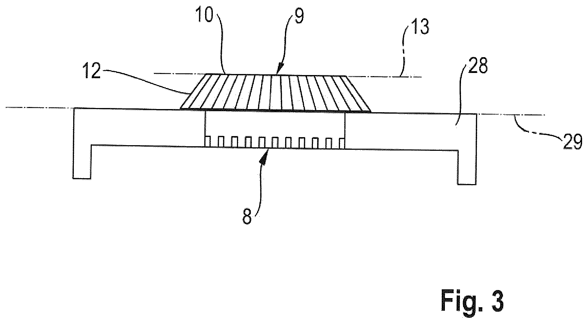

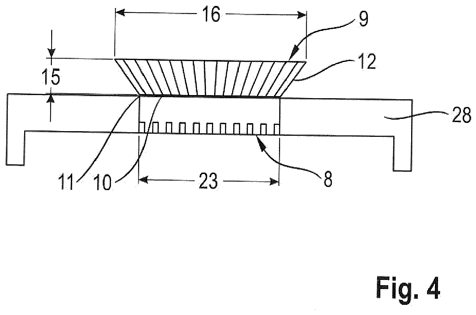

Erfindungsgemäß umfasst das Grillaufsatzset **1** ferner einen Flammenschutz **9,** der hier von einem von dem Gehäuse **3** körperlich getrennten, separaten Bauteil gebildet ist. Der Flammenschutz **9,** der sich insbesondere anhand der **Figuren 3** **und** **4** ergibt, umfasst seinerseits ein in sich ebenes Bodenelement **10** sowie ein an einem äußeren Rand **11** des Bodenelements **10** umlaufendes Kragenelement **12.** Das Bodenelement **10** erstreckt sich innerhalb einer Bodenebene **13,** während das Kragenelement **12** ausgehend von dem Bodenelement **10** über die Bodenebene **13** hinaus vorsteht. Auf diese Weise weist der Flammenschutz **9** eine Höhe **15** auf, die einer senkrecht zu der Bodenebene **13** gemessenen Höhe des Kragenelements **12** entspricht. Die Höhe **15** des Flammenschutzes **9** beträgt hier ca. 1,5 cm. In dem gezeigten Beispiel ist der Flammenschutz **9** kreisförmig ausgebildet, wobei ein Durchmesser **16** des Flammenschutzes **9** einen Durchmesser **23** der Brenneinrichtung **8** des Gaskochers **2** übersteigt. Der Durchmesser **16** des Flammenschutzes **9** beträgt hier ca. 15 cm. Das Verhältnis von Höhe **15** zu Durchmesser **16** des Flammenschutzes **9** beträgt in dem gezeigten Beispiel mithin 1:10. Das prinzipielle Durchmesserverhältnis von Flammenschutz **9** und Brenneinrichtung **8** ergibt sich insbesondere anhand von **Figur 4****.** Besagtes Durchmesserverhältnis ist insoweit von Bedeutung, als vorteilhafterweise mittels des Flammenschutzes **9** eine Abschirmung sämtlicher von der Brenneinrichtung **8** ausgehender Flammen bzw. deren Ablenkungen sichergestellt sein sollte. Hierdurch wird der technische Effekt erzielt, dass eine sich in dem Gehäuse **3** ausbildende Wärmeentwicklung in solcher Weise gleichmäßig sowie gedämpft erfolgt. Hierdurch wird das auf den Gargutträger **4** aufgelegte Grillgut gleichmäßig erwärmt und insbesondere vor etwaigem Verbrennen geschützt.

Bei Vorliegen in einer Backstellung ist der Flammenschutz **9** derart relativ zu der Brenneinrichtung **8** ausgerichtet, dass sich das Kragenelement **12** ausgehend von dem Bodenelement **10** in Richtung auf die Brenneinrichtung **8** zu erstreckt. Mit anderen Worten liegt der Flammenschutz **9** gewissermaßen "umgedreht" auf der Brenneinrichtung **8** auf. Dies hat zur Folge, dass ausgehend von der Brenneinrichtung **8** aufsteigende Flammen davon abgehalten werden, seitlich an dem Flammenschutz **9** "vorbei zu schlagen". Das Kragenelement **12** bewirkt hingegen eine solche Verlängerung einer Ausbreitungsstrecke, dass die Flammen der Brenneinrichtung **8** effektiv daran gehindert sind, den Flammenschutz **9** zu verlassen. Ein Eintrag von Wärmeenergie in das Gehäuse **3** des Grillaufsatzsets **1** erfolgt mithin lediglich mittels einer von der Brenneinrichtung **8** ausgehenden Luftströmung sowie über Strahlungswärme, die von dem sich aufheizenden Flammenschutz **9** aus in den Innenraum **6** abgestrahlt wird. Die Backstellung des Flammenschutzes **9** ist besonders gut anhand von **Figur 3** erkennbar.

Demgegenüber veranschaulicht **Figur 4** die Grillstellung des Flammenschutzes **9.** In dieser liegt der Flammenschutz **9** in einer um 180° um eine horizontale Drehachse gegenüber der Backstellung gedrehten Stellung vor, wobei sich das Kragenelement **12** ausgehend von dem Bodenelement **10** in eine Richtung von der Brenneinrichtung **8** weg erstreckt. Diese Ausgestaltung erlaubt es, das von der Brenneinrichtung **8** ausgehende Flammen zumindest teilweise an dem Flammenschutz **9** vorbei schlagen, sodass eine Wärmeentwicklung im Bereich des Gargutträgers **4** deutlich ausgeprägter ist, als bei Verwendung des Flammenschutzes **9** in seiner Backstellung. Die Grillstellung des Flammenschutzes **9** ist mithin besonders gut dazu geeignet, Grillgut zuzubereiten, das besonders hohe Temperaturen und beispielsweise eine Röstung erfordert.

Vorteilhafterweise wirkt der Flammenschutz **9** in seiner Grillstellung und in seiner Backstellung mit einem in den Figuren nicht dargestellten Fettschutz zusammen. Dieser dient dazu, von dem Grillgut herabtropfendes Fett aufzunehmen und auf diese Weise den unmittelbaren Kontakt mit dem Flammenschutz **9** zu vermeiden. Letzteres kann zu einem unerwünschten Verbrennen des Fetts und einem damit verbundenen Flammenschlag führen. Der Fettschutz kann insbesondere von einer Mehrzahl von Lavasteinen gebildet sein. Insbesondere bei Vorliegen des Flammenschutzes **9** in seiner Grillstellung, in der er mittels des Bodenelements **10** und des Kragenelements **12** eine Topfform bildet, können derartige Lavasteine besonders gut auf den Flammenschutz **9** aufgelegt und seitlich mittels des Kragenelements **12** gehalten werden.

In dem gezeigten Beispiel ist der Gaskocher **2** mit insgesamt vier, sich radial von einem Mittelbereich des Gaskochers **2** weg erstreckenden Tragelementen **28** ausgestattet. Diese dienen bei bestimmungsgemäße Verwendung des Gaskochers **2** dazu, Kochgeschirr aufzunehmen, das auf diese Weise in einem definierten Abstand von der Brenneinrichtung **8** aufgestellt werden kann. Der Flammenschutz **9** befindet sich in dem gezeigten Beispiel durchweg in unmittelbarem Kontakt mit einer oberen Aufstellfläche **29** der Tragelemente **28** und ist unmittelbar auf letztere aufgesetzt. Diese Verwendungsweise ist im Fall des Vorhandenseins derartiger Tragelemente **28** besonders einfach, wobei insbesondere eine Positionierung des Flammenschutzes **9** relativ zu der Brenneinrichtung **8** besonders einfach möglich ist.

Um sicherzustellen, dass sich die Brenneinrichtung **8** zumindest teilweise durch die untere Ausnehmung **7** des Gehäuses **3** hindurch in den Innenraum **6** des Gehäuses **3** hinein erstreckt, ist das Gehäuse **3** in dem gezeigten Beispiel an seinem unteren Ende mit Aussparungen **25** ausgestattet, die korrespondierend zu den Tragelementen **28** ausgebildet sind. Mithin sind die Aussparungen **25** derart ausgebildet, dass sie Räume für die Tragelemente **28** bereitstellen, in die diese jeweils eintreten können, sobald das Gehäuse **3** auf dem Gaskocher **2** positioniert ist. Dies ist besonders gut anhand von **Figur 1** erkennbar. Die Aussparungen **25** sind insoweit von Vorteil, als sie eine besonders einfache Möglichkeit darstellen, das Gehäuse **3** bis unterhalb der oberen Aufstellfläche **29** der Tragelemente **28** zu führen und folglich gewissermaßen in unmittelbaren Kontakt mit einer Oberseite des Gaskochers **2** zu bringen. Hierdurch ist insbesondere sichergestellt, dass die oberhalb der Oberseite des Gaskochers **2** befindliche Brenneinrichtung **8** sich zumindest teilweise bis in den Innenraum **6** des Gehäuses **3** hinein erstreckt.

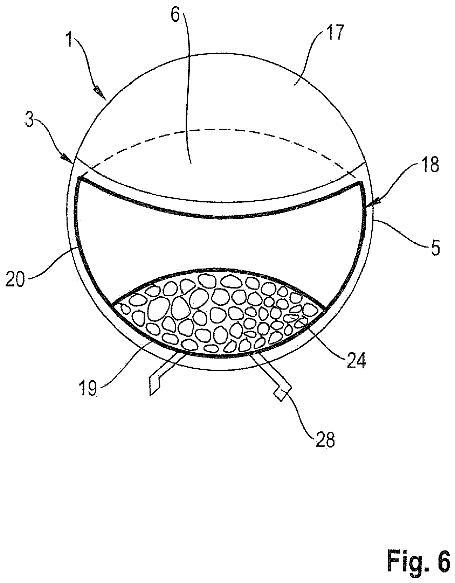

In einer in **Figur 6** gezeigten, vorteilhaften Ausgestaltung wirkt das erfindungsgemäße Grillaufsatzset **1** mit einem Kohleeinsatz **18** zusammen. Dieser verfügt in dem gezeigten Beispiel über ein Bodenelement **19** sowie einen das Bodenelement **19** umlaufend einfassenden Rand **20.** Der Kohleeinsatz **18** ist derart ausgebildet, dass er von der Oberseite **14** des Gehäuses **3** aus in selbiges einsetzbar ist, wobei eine Form des Randes **20** des Kohleeinsatzes auf eine Form des Randes **5** des Gehäuses **3** abgestimmt ist. Auf diese Weise ist der Kohleeinsatz **18** zumindest im Wesentlichen passgenau in das Gehäuse **3** einsetzbar. Das Bodenelement **19** des Kohleeinsatzes **8** ist zumindest im Wesentlichen verschlossen, sodass in den Kohleeinsatz **18** eingelegte Kohle **24** in dem Kohleeinsatz **18** lagerbar ist. Insbesondere ist durch den Kohleeinsatz **18** ein Austritt der Kohle **24** durch die untere Ausnehmung **7** des Gehäuses **3** verhindert. Mit anderen Worten ist die Ausnehmung **7** gewissermaßen durch den Kohleeinsatz **18** versperrt bzw. verschlossen, sodass das Einfüllen von Kohle **24** in das Gehäuse **3** des Grillaufsatzsets **1** möglich ist. Wie vorstehend bereits beschrieben, ist es dabei von Vorteil, wenn das Bodenelement **19** sich in einem gewissen Abstand zu der unteren Ausnehmung **7** des Gehäuses **3** befindet, vorzugsweise mindestens 2 cm, sodass der Kohleeinsatz **18** im Zuge des Aufsetzens des Grillaufsatzsets **1** auf den Gaskocher **2** nicht mit der Brenneinrichtung **8** kollidiert.

Das in **Figur 6** dargestellte Grillaufsatzset **1** verfügt weiterhin beispielhaft über einen Deckel **17,** der unter Verwendung eines in den Figuren nicht dargestellten Scharniers verdrehbar an dem Gehäuse **3** angeordnet ist. Mittels des Deckels **17** ist die Möglichkeit gegeben, den Innenraum **6** des Gehäuses **3** zu der Oberseite **14** hin zu verschließen und auf diese Weise in den Innenraum **6** eingetragene Wärmeenergie besser zu konservieren.

### Bezugszeichenliste

- 1: Grillaufsatzset
- 2: Gaskocher
- 3: Gehäuse
- 4: Gargutträger
- 5: Rand
- 6: Innenraum
- 7: Ausnehmung
- 8: Brenneinrichtung
- 9: Flammenschutz
- 10: Bodenelement
- 11: Rand
- 12: Kragenelement
- 13: Bodenebene
- 14: Oberseite
- 15: Höhe
- 16: Durchmesser
- 17: Deckel
- 18: Kohleeinsatz
- 19: Bodenelement
- 20: Rand
- 21: Grill
- 22: Gasspeicher
- 23: Durchmesser
- 24: Kohle
- 25: Aussparung
- 26: Drehregler
- 27: Gehäuse
- 28: Traggestell
- 29: Aufstellfläche

## Patentansprüche

1. Grillaufsatzset (1), insbesondere für einen Gaskocher (2), umfassend
- mindestens ein Gehäuse (3) sowie
- mindestens einen an oder in dem Gehäuse (3) lagerbaren Gargutträger (4),
wobei das Gehäuse (3) mindestens einen umlaufenden Rand (5) aufweist, der einen Innenraum (6) des Gehäuses (3) räumlich begrenzt,
wobei das Gehäuse (3) an einem unteren Ende mindestens eine Ausnehmung (7) aufweist, mittels der das Gehäuse (3) derart auf eine Brenneinrichtung (8) eines Gaskochers (2) aufsetzbar ist, dass mittels der Brenneinrichtung (8) erzeugte Wärmeenergie durch die Ausnehmung (7) hindurch in den Innenraum (6) des Gehäuses (3) eintreten kann,
wobei das Grillaufsatzset (1) einen der Ausnehmung (7) zugeordneten Flammenschutz (9) umfasst, der auf eine Brenneinrichtung (8) eines Gaskochers (2) aufsetzbar ist,
wobei der Flammenschutz (9) ein Bodenelement (10) sowie ein umlaufendes, sich ausgehend von dem Bodenelement (10) erstreckendes Kragenelement (12) aufweist, das über eine Bodenebene (13) des Bodenelements (10) vorsteht,
**dadurch gekennzeichnet, dass**
der Flammenschutz (9) derart relativ zu dem Gehäuse (3) bewegbar ausgebildet ist, dass der Flammenschutz (9) zwischen einer Backstellung und einer Grillstellung überführbar ist,
wobei sich das Kragenelement (12) bei Vorliegen des Flammenschutzes (9) in seiner Backstellung ausgehend von der Bodenebene (13) des Bodenelements (10) in Richtung von einer Oberseite (14) des Gehäuses (3) weg und bei Vorliegen in seiner Grillstellung ausgehend von der Bodenebene (13) in Richtung der Oberseite (14) des Gehäuses (3) erstreckt.

2. Grillaufsatzset (1) nach Anspruch 1, **dadurch gekennzeichnet, dass** der Flammenschutz (9) drehbar relativ zu dem Gehäuse (3) ausgebildet ist.

3. Grillaufsatzset (1) nach Anspruch 1 oder 2, **dadurch gekennzeichnet, dass** der Flammenschutz (9) elliptisch, insbesondere kreisförmig, ausgebildet ist.

4. Grillaufsatzset (1) nach einem der Ansprüche 1 bis 3, **dadurch gekennzeichnet, dass** sich das Kragenelement (12) ausgehend von einem Rand (11) des Bodenelements (10) erstreckt, vorzugsweise senkrecht zu der Bodenebene (13).

5. Grillaufsatzset (1) nach einem der Ansprüche 1 bis 4, **dadurch gekennzeichnet, dass** eine von der Bodenebene (13) aus sowie senkrecht zu der Bodenebene (13) gemessene Höhe (15) des Kragenelements (12) im Bereich zwischen 0,5 cm und 4,0 cm, vorzugsweise zwischen 1,0 cm und 2,0 cm, liegt.

6. Grillaufsatzset (1) nach einem der Ansprüche 1 bis 5, **dadurch gekennzeichnet, dass** ein Durchmesser (16) des Flammenschutzes (9) im Bereich zwischen 10 cm und 20 cm, vorzugsweise im Bereich zwischen 12,5 cm und 17,5 cm liegt.

7. Grillaufsatzset (1) nach einem der Ansprüche 1 bis 6, **dadurch gekennzeichnet, dass** die Ausnehmung (7) eine elliptische, vorzugsweise eine kreisförmige, Form aufweist.

8. Grillaufsatzset (1) nach einem der Ansprüche 1 bis 7, **dadurch gekennzeichnet, dass** der Rand (5) des Gehäuses (3) im Querschnitt betrachtet eine elliptische, vorzugsweise eine kreisförmige, Form aufweist.

9. Grillaufsatzset (1) nach einem der Ansprüche 1 bis 8, **gekennzeichnet durch** einen Deckel (17), der derart an das Gehäuse (3) anschließbar ist, dass er gemeinsam mit dem Gehäuse (3) den Innenraum (6) des Gehäuses (3) einfasst.

10. Grillaufsatzset (1) nach einem der Ansprüche 1 bis 9, **gekennzeichnet durch** einen Kohleeinsatz (18), der derart in das Gehäuse (3) einsetzbar ist, dass die untere Ausnehmung (7) des Gehäuses (3) mittels des Kohleeinsatzes (18) zumindest teilweise von oben her verschließbar ist, sodass ein Austritt von Kohle (24) aus dem Innenraum (6) des Gehäuses (3) heraus durch die Ausnehmung (7) hindurch verhindert ist.

11. Grillaufsatzset (1) nach einem der Ansprüche 1 bis 10, **dadurch gekennzeichnet, dass** der Flammenschutz (9) zumindest bei Vorliegen in einer Grillstellung auf einer dem Gargutträger (4) zugewandten Seite mit mindestens einem Fettschutz, insbesondere in Form mindestens eines auf dem Flammenschutz (9) liegenden Lavasteins, zusammenwirkt.

12. Grill (21), umfassend einen Gaskocher (2), der Gaskocher (2) umfassend
- einen Gasspeicher (22) sowie
- eine Brenneinrichtung (8),
wobei die Brenneinrichtung (8) und der Gasspeicher (22) mittels einer Verbindungsleitung strömungstechnisch miteinander verbunden sind,
**gekennzeichnet durch**
ein Grillaufsatzset (1) nach einem der vorhergehenden Ansprüche,
wobei das Gehäuse (3) derart auf die Brenneinrichtung (8) aufgesetzt ist, dass mittels der Brenneinrichtung (8) erzeugte Wärmeenergie durch die untere Ausnehmung (7) des Gehäuses (3) hindurch in den Innenraum (6) des Gehäuses (3) eintreten kann,
wobei der Flammenschutz (9) auf die Brenneinrichtung (8) aufgesetzt ist,
wobei ein Durchmesser (16) des Flammenschutzes (9) einen Durchmesser (23) der Brenneinrichtung (8) übersteigt.

13. Verfahren zum Betrieb eines Grills (21) nach Anspruch 12,
**dadurch gekennzeichnet, dass**
der Flammenschutz (9) ausgehend von seiner Backstellung in seine Grillstellung oder umgekehrt überführt wird.

14. Verfahren nach Anspruch 13, **dadurch gekennzeichnet, dass** der Flammenschutz (9) mittels Drehens um eine horizontale Drehachse zwischen seiner Backstellung und seiner Grillstellung überführt wird.

## Claims

1. A grilling set (1), in particular for a gas cooker (2), comprising
- at least one housing (3) and
- at least one carrier for food to be cooked (4) which may be mounted on or in the housing (3),
wherein the housing (3) has at least one peripheral edge (5) which spatially defines an interior (6) of the housing (3),
wherein the housing (3) at a lower end has at least one recess (7), the housing (3) being able to be positioned thereby on a burner device (8) of a gas cooker (2), such that thermal energy generated by means of the burner device (8) is able to enter the interior (6) of the housing (3) through the recess (7),
wherein the grilling set (1) comprises a flame guard (9) which is assigned to the recess (7) and which is able to be positioned on a burner device (8) of a gas cooker (2),
wherein the flame guard (9) has a base element (10) as well as a peripheral collar element (12) which extends out from the base element (10) and which protrudes over a base plane (13) of the base element (10),
**characterized in that**
the flame guard (9) is configured to be movable relative to the housing (3), such that the flame guard (9) is able to be transferred between a baking position and a grilling position,
wherein the collar element (12), when the flame guard (9) is in its baking position, extends out from the base plane (13) of the base element (10) in the direction away from an upper face (14) of the housing (3) and, when the flame guard is in its grilling position, the collar element extends out from the base plane (13) in the direction of the upper face (14) of the housing (3).

2. The grilling set (1) according to Claim 1, **characterised in that** the flame guard (9) is configured to be rotatable relative to the housing (3).

3. The grilling set (1) according to Claim 1 or 2, **characterised in that** the flame guard (9) is configured in an elliptical, in particular circular, manner.

4. The grilling set (1) according to one of Claims 1 to 3, **characterised in that** the collar element (12) extends out from an edge (11) of the base element (10), preferably perpendicular to the base plane (13).

5. The grilling set (1) according to one of Claims 1 to 4, **characterised in that** a height (15) of the collar element (12) measured from the base plane (13) and perpendicular to the base plane (13) ranges between 0.5 cm and 4.0 cm, preferably between 1.0 cm and 2.0 cm.

6. The grilling set (1) according to one of Claims 1 to 5, **characterised in that** a diameter (16) of the flame guard (9) ranges between 10 cm and 20 cm, preferably ranges between 12.5 cm and 17.5 cm.

7. The grilling set (1) according to one of Claims 1 to 6, **characterised in that** the recess (7) has an elliptical, preferably a circular, shape.

8. The grilling set (1) according to one of Claims 1 to 7, **characterised in that**, viewed in cross section, the edge (5) of the housing (3) has an elliptical, preferably a circular, shape.

9. The grilling set (1) according to one of Claims 1 to 8, **characterised by** a cover (17) which is able to be attached to the housing (3), such that together with the housing (3) it encompasses the interior (6) of the housing (3).

10. The grilling set (1) according to one of Claims 1 to 9, **characterised by** a charcoal insert (18) which may be inserted into the housing (3) such that the lower recess (7) of the housing (3) is able to be closed at least partially from above by means of the charcoal insert (18), so that charcoal (24) is prevented from escaping from the interior (6) of the housing (3) through the recess (7).

11. The grilling set (1) according to one of Claims 1 to 10, **characterised in that** the flame guard (9), at least when in a grilling position, on a side facing the carrier for food to be cooked (4) cooperates with at least one grease guard, in particular in the form of at least one lava stone located on the flame guard (9).

12. A grill (21) comprising a gas cooker (2), the gas cooker (2) comprising
- a gas reservoir (22) and
- a burner device (8),
wherein the burner device (8) and the gas reservoir (22) are connected together in terms of flow technology by means of a connecting line,
**characterised by**
a grilling set (1) according to one of the preceding claims,
wherein the housing (3) is positioned onto the burner device (8) such that thermal energy generated by the burner device (8) is able to enter the interior (6) of the housing (3) through the lower recess (7) of the housing (3)
wherein the flame guard (9) is positioned onto the burner device (8),
wherein a diameter (16) of the flame guard (9) exceeds a diameter (23) of the burner device (8).

13. A method for operating a grill (21) according to Claim 12,
**characterised in that**
the flame guard (9) is transferred from its baking position into its grilling position or vice versa.

14. The method according to Claim 13, **characterized in that** the flame guard (9) is transferred between its baking position and its grilling position by rotating about a horizontal rotational axis.

## Revendications

1. Ensemble de grill (1), en particulier pour un réchaud à gaz (2), comprenant
- au moins une enceinte (3) et
- au moins un support de produit de cuisson (4) pouvant être logé sur ou dans l'enceinte (3),
sachant que l'enceinte (3) comporte au moins un bord périphérique (5), qui délimite dans l'espace un compartiment intérieur (6) de l'enceinte (3),
sachant que l'enceinte (3) comporte à une extrémité inférieure au moins un évidement (7), au moyen duquel l'enceinte (3) peut être posée sur un dispositif de combustion (8) d'un réchaud à gaz (2) de telle manière qu'au moyen du dispositif de combustion (8) de l'énergie thermique produite peut pénétrer à travers l'évidement (7) dans l'espace intérieur (6) de l'enceinte (3),
sachant que l'ensemble de grill (1) comprend une protection pare-flamme (9) attribuée à l'évidement (7), qui peut être posée sur un dispositif de combustion (8) d'un réchaud à gaz (2),
sachant que la protection pare-flamme (9) comporte un élément de fond (10) ainsi qu'un élément en collerette (12) périphérique, s'étendant en partant de l'élément de fond (10), qui dépasse sur un plan de fond (13) de l'élément de fond (10),
**caractérisé en ce que**
la protection pare-flamme (9) est constituée mobile par rapport à l'enceinte (3) de telle manière que la protection pare-flamme (9) peut être transposée entre une position de cuisson et une position de grill,
sachant que l'élément en collerette (12) s'étend en présence de la protection pare-flamme (9) dans sa position de cuisson s'éloignant du plan de fond (13) de l'élément de fond (10) en direction d'une face supérieure (14) de l'enceinte (3) et en présence de sa position de grill en partant du plan de fond (13) en direction de la face supérieure (14) de l'enceinte (3).

2. Ensemble de grill (1) selon la revendication 1, **caractérisé en ce que** la protection pare-flamme (9) est constituée pouvant tourner par rapport à l'enceinte (3).

3. Ensemble de grill (1) selon la revendication 1 ou 2, **caractérisé en ce que** la protection pare-flamme (9) est constituée elliptique, en particulier circulaire.

4. Ensemble de grill (1) selon l'une quelconque des revendications 1 à 3, **caractérisé en ce que** l'élément en collerette (12) s'étend depuis un bord (11) de l'élément de fond (10), de préférence perpendiculairement au plan de fond (13).

5. Ensemble de grill (1) selon l'une quelconque des revendications 1 à 4, **caractérisé en ce qu'**une hauteur (15) mesurée du plan de fond (13) ainsi que perpendiculairement au plan de fond (13) de l'élément en collerette (12) se situe dans une plage entre 0,5 cm et 4,0 cm, de préférence entre 1,0 cm et 2,0 cm.

6. Ensemble de grill (1) selon l'une quelconque des revendications 1 à 5, **caractérisé en ce qu'**un diamètre (16) de la protection pare-flamme (9) se situe dans une plage entre 10 cm et 20 cm, de préférence dans une plage entre 12,5 cm et 17,5 cm.

7. Ensemble de grill (1) selon l'une quelconque des revendications 1 à 6, **caractérisé en ce que** l'évidement (7) comporte une forme elliptique, de préférence une forme circulaire.

8. Ensemble de grill (1) selon l'une quelconque des revendications 1 à 7, **caractérisé en ce que** le bord (5) de l'enceinte (3) comporte, vue en section transversale, une forme elliptique, de préférence une forme circulaire.

9. Ensemble de grill (1) selon l'une quelconque des revendications 1 à 8, **caractérisé par** un couvercle (17), qui peut être raccordé à l'enceinte (3) de telle manière qu'il entoure conjointement à l'enceinte (3) l'espace intérieur (6) de l'enceinte (3).

10. Ensemble de grill (1) selon l'une quelconque des revendications 1 à 9, **caractérisé par** un bac à charbon (18), qui peut être inséré dans l'enceinte (3) de telle manière que l'évidement (7) inférieur de l'enceinte (3) peut être fermé par le haut au moins en partie au moyen du bac à charbon (18) de telle sorte qu'une sortie de charbon (24) de l'espace intérieur (6) de l'enceinte (3) à travers l'évidement (7) est évitée.

11. Ensemble de grill (1) selon l'une quelconque des revendications 1 à 10, **caractérisé en ce que** la protection pare-flamme (9) au moins en présence d' une position de grill sur un côté tourné vers le support de produit à cuire (4) coopère avec au moins une protection anti-graisse, en particulier sous la forme d'au moins une pierre de lave se trouvant sur la protection pare-flamme (9).

12. Grill (21), comprenant un réchaud à gaz (2), le réchaud à gaz (2) comprenant
- un réservoir de gaz (22) et
- un dispositif de combustion (8)
sachant que le dispositif de combustion (8) et le réservoir de gaz (22) sont reliés entre eux selon la technique des fluides au moyen d'un conduit de liaison,
**caractérisé par**
un ensemble de grill (1) selon l'une quelconque des revendications précédentes,
sachant que l'enceinte (3) est posée sur le dispositif de combustion (8) de telle manière que de l'énergie thermique produite au moyen du dispositif de combustion (8) peut pénétrer à travers l'évidement inférieur (7) de l'enceinte (3) dans l'espace intérieur (6) de l'enceinte (3),
sachant que la protection pare-flamme (9) est posée sur le dispositif de combustion (8),
sachant qu'un diamètre (16) de la protection pare-flamme (9) dépasse un diamètre (23) du dispositif de combustion (8).

13. Procédé pour faire fonctionner un grill (21) selon la revendication 12,
**caractérisé en ce que**
la protection pare-flamme (9) est transférée en partant de sa position de cuisson dans sa position grill ou inversement.

14. Procédé selon la revendication 13, **caractérisé en ce que** la protection pare-flamme (9) est transférée par rotation autour d'un axe de rotation horizontal entre sa position de cuisson et sa position de grill.
